(19) Europäisches Patentamt
European Patent Office
Office européen des brevets

(11) **EP 2 448 138 A2**

(12) **EUROPEAN PATENT APPLICATION**
published in accordance with Art. 153(4) EPC

(43) Date of publication:
**02.05.2012 Bulletin 2012/18**

(51) Int Cl.:
***H04B 7/04*** *(2006.01)*    ***H04W 72/04*** *(2009.01)*

(21) Application number: **10792328.6**

(86) International application number:
**PCT/KR2010/004075**

(22) Date of filing: **23.06.2010**

(87) International publication number:
**WO 2010/151046 (29.12.2010 Gazette 2010/52)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority:  **24.06.2009   KR 20090056706**

(71) Applicant: **Pantech Co., Ltd.**
**Seoul 121-270 (KR)**

(72) Inventors:
• **PARK, Kyoungmin**
**Seoul, 121-270 (KR)**

• **KWON, Kibum**
**Seoul, 121-270 (KR)**
• **SUH, Sungjin**
**Seoul 121-270 (KR)**

(74) Representative: **Jordan, Volker Otto Wilhelm et al**
**Weickmann & Weickmann**
**Patentanwälte**
**Postfach 860 820**
**81635 München (DE)**

(54) **POWER ALLOCATION METHOD FOR WIRELESS COMMUNICATION SYSTEM, APPARATUS FOR SAME, AND TRANSCEIVER DEVICE USING THIS FORM OF SIGNAL TRANSMISSION**

(57)    Disclosed is a wireless communication system and a power allocation in the wireless communication system.

*FIG.11*

**Description**

Technical Field

The present invention relates to a wireless communication system, and more particularly to a power allocation in a wireless communication system.

Background Art

In general, power, which can be used when data or a signal is transmitted and received in a communication system, is limited.

Accordingly, it is highly required to properly allocate power to transmit data or a signal.

Disclosure

Technical Problem

The present disclosure provides a technology, which can increase throughput and efficiently allocate power to maximize a transmission capacity in a wireless communication system.

Technical solution

In accordance with an aspect of the present invention, there is provided a method of allocating power, including: acquiring at least one of reception power, a reception SINR, or a reception SNR of one or more receiving apparatuses based on virtual channel information generated by multiplying a precoding matrix and channel information; and allocating power for each stream such that the reception SINR is maximized.

Brief Description of the Drawings

The foregoing and other objects, features and advantages of the present invention will become more apparent from the following detailed description when taken in conjunction with the accompanying drawings in which:

FIG. 1 is a diagram illustrating a wireless communication system to which embodiments of the present invention are applied.
FIG. 2 illustrates a process of generating a signal of an uplink physical channel in a wireless communication system to which embodiments of the present invention are applied.
FIG. 3 is illustrates a process of generating a signal of a downlink physical channel in a wireless communication system to which embodiments of the present invention are applied.
FIG. 4 is a diagram of a precoder included in a transmitting apparatus and a post-decoder included in a receiving apparatus in a SU-MIMO.
FIG. 5 is a diagram of a precoder included in a transmitting apparatus and a post-decoder included in a receiving apparatus in a MU-MIMO.
FIG. 6 is a diagram of a precoder included in a transmitting apparatus and a post-decoder included in a receiving apparatus according to embodiments of the present invention.
FIG. 7 is a block diagram of the system of FIG. 6.
FIG. 8 illustrates constructions of a precoder included in a transmitting apparatus and a post-decoder included in a receiving apparatus according to embodiments of the present invention when the number of antennas in the transmitting apparatus is 4 and two receiving apparatuses receive signals through two antennas, respectively.
FIG. 9 is a block diagram of the system of FIG. 8.
FIG. 10 is a block diagram of a MIMO system implementing a power allocation and a precoding for increasing an SINR.
FIG. 11 is a flowchart of a power allocation method according to embodiments of the present invention.

Best Mode

Mode for Invention

Hereinafter, exemplary embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, a third component may be "connected," "coupled," and "joined" between the first and second components, although the first component may be directly connected, coupled or joined to the second component.

Particularly, the present specification discloses a technology in which a transmitting apparatus allocates power for each stream such that at least one of reception power, a reception SINR, or a reception SNR of one or more receiving apparatuses calculated based on a precoding matrix and channel information. For the convenience of descriptions, in the present specification, at least one of reception power, a reception SINR, or a reception SNR of one or more receiving apparatuses is referred to as a "reception SINR".

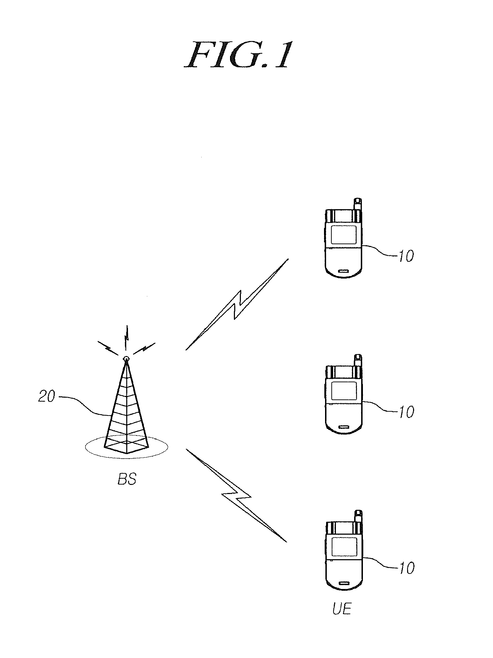

FIG. 1 is a diagram illustrating a wireless communication system to which embodiments of the present invention are applied.

A wireless communication system is widely arranged to provide various communication services such as voice and packet data transmission.

Referring to FIG. 1, the wireless communication system includes a User Equipment (UE) 10 and a Base Station (BS) 20. The UE 10 and the BS 20 use various power allocation methods, which will be described below.

According to the present invention, the UE 10 refers to a generic concept indicating a user terminal in wireless communication, and should be interpreted as a concept including all of UEs in a WCDMA and a LTE, a UE in an HSPA, a MS (Mobile Station), a UT (User Terminal), a SS (Subscriber Station), and a wireless device in a GSM.

In general, the BS 20 or a cell refers to a fixed station communicating with the UE 10, and may be referred to as other terms such as a node-B, an eNB (evolved Node-B), a BTS (Base Transceiver System), and an access point.

That is, the BS 20 or a cell according to the present invention should be interpreted as a generic concept indicating some areas covered by a BSC in a CDMA and a NodeB in a WCDMA, and includes various coverage areas such as a megacell, a macrocell, a microcell, a pococell, and a femtocell.

The UE 10 and the BS 20 according to the present invention are used as a generic meanings, which refer to transmitting/receiving subjects used to implement a technology or a technological idea described in the present disclosure, and are not limited by a specifically designated term or word.

A multiple access scheme applied to a wireless communication system has no limitation, and the wireless communication system can use various multiple access schemes such as a CDMA (Code Division Multiple Access), a TDMA (Time Division Multiple Access), an FDMA (Frequency Division Multiple Access), an OFDMA (Orthogonal Frequency Division Multiple Access), an OFDM-FDMA, an OFDM-TDMA, and an OFDM-CDMA.

A TDD (Time Division Duplex) scheme corresponding to a transmission using different times may be used for an uplink transmission and a downlink transmission, or a FDD (Frequency Division Duplex) scheme corresponding to a transmission using different frequencies may be used for an uplink transmission and a downlink transmission.

The power allocation technology according to an embodiment of the present invention may be applied to resource allocation fields of asynchronous wireless communication evolving into an LTE (Long Term Evolution) and an LTE-advanced via a GSM, a WCDMA, and an HSPA, and synchronous wireless communication evolving into a CDMA, a CDMA-2000, and a UMB. The present invention should not be interpreted as a limited and restricted concept to a specific wireless communication field, but should be interpreted as a concept including all technical fields, to which ideas of the present invention can be applied.

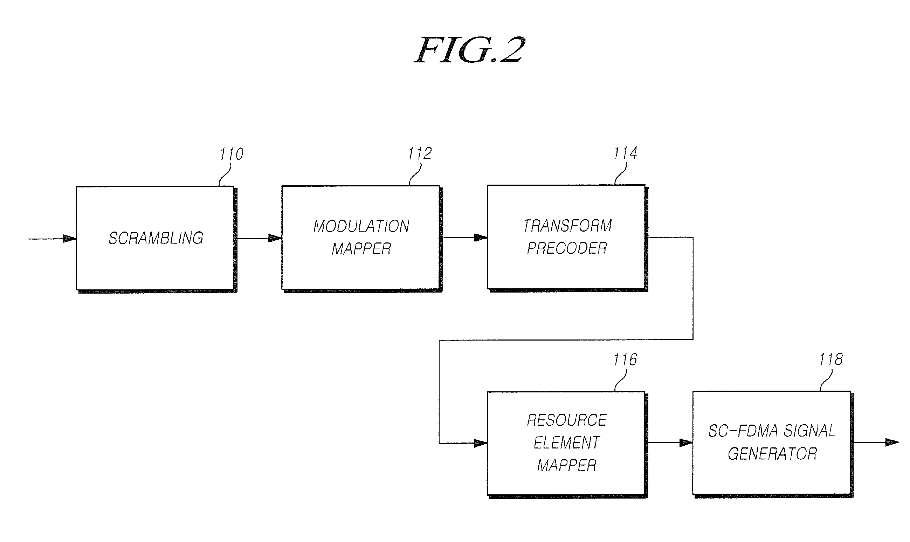

FIG. 2 illustrates a process of generating a signal of an uplink physical channel in a wireless communication system to which embodiments of the present invention are applied.

Referring to FIG. 2, each of bits via a channel coding is scrambled 110 through a modular 2 operation with codes generated by a scrambling generator in a bit-to-bit manner, and the scrambled bits are input to a modulation mapper 112 to be mapped to complex symbols through each modulation method such as a QPSK, a 16QAM, and a 64QAM. Further, the scrambled bits perform a precoding transform 114 for generating complex symbols, map the complex symbols 116 to specific resource elements, and then are generated to a complex time-domain SC-FDMA (Single Carrier Frequency Multiplexing Access) signals for each antenna port to be transmitted.

For example, a method of generating a Physical Uplink Shared Channel (PUSCH) signal or a physical Uplink Control Channel (PUCCH) signal and transmitting it from the UE 10 to the BS 20 will be discussed in the following description.

First, each of bits via a channel coding is scrambled 110 through a modular 2 operation with codes generated by a scrambling generator in a bit-to-bit manner, and the scrambled bits are input to a modulation mapper 112 to be mapped to complex symbols through each modulation method such as a QPSK, a 16QAM, and a 64QAM. Further, the scrambled bits perform a precoding transform 114 for generating complex symbols, map the complex symbols 116 to specific resource elements, and then are generated to complex time-domain SC-FDMA (Single Carrier Frequency Multiplexing Access) signals for each antenna port to be transmitted.

At this time, of course, a PUSCH or a PUCCH is described as an example of a physical data channel or a physical control channel, and the same method may be applied to another physical data channel or another physical control channel.

Although the structure of generating the signal of the uplink physical channel in the wireless communication system to which embodiments of the present invention are applied has been described with reference to FIG. 2, the present invention is not limited thereto. That is, the structure of generating the signal of the uplink physical channel in the wireless communication system to which embodiments of the present invention are applied may omit some parts of elements, replace the parts of the elements with/change to other elements, or add other elements.

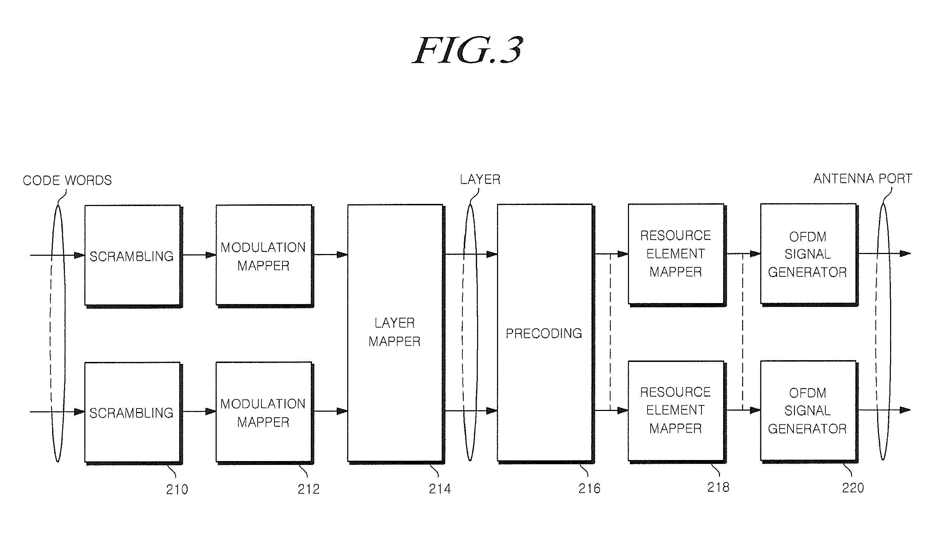

FIG. 3 illustrates a structure of generating a signal of a downlink physical channel in a wireless communication system to which embodiments of the present invention are applied.

Referring to FIG. 3, the wireless communication system to which the embodiments are applied includes a scrambler 210, a modulation mapper 212, a layer mapper 214, a precoder 216, a resource element mapper 218, and an OFDM signal generator 220. Meanwhile, the wireless communication system may be the communication system or the transmitting apparatus of the BS 10 of FIG. 1.

Bits input in a form of codewords via a channel coding in a downlink are scrambled by the scrambler 210 and input to the modulation mapper 212. The modulation mapper 212 modulates the scrambled bits to complex modulation symbols, and the layer mapper 214 maps the complex modulation symbols to one or a plurality of transmission layers. Next, the precoder 216 precodes the complex modulation symbols on each of transmission channels of antenna ports. And then, the resource element mapper 218 maps complex modulation symbols for each antenna port to corresponding resource elements.

Subsequently, the OFDM signal generator 220 generates a complex time domain OFDM signal for each antenna. The complex time domain OFDM signal is transmitted through an antenna port.

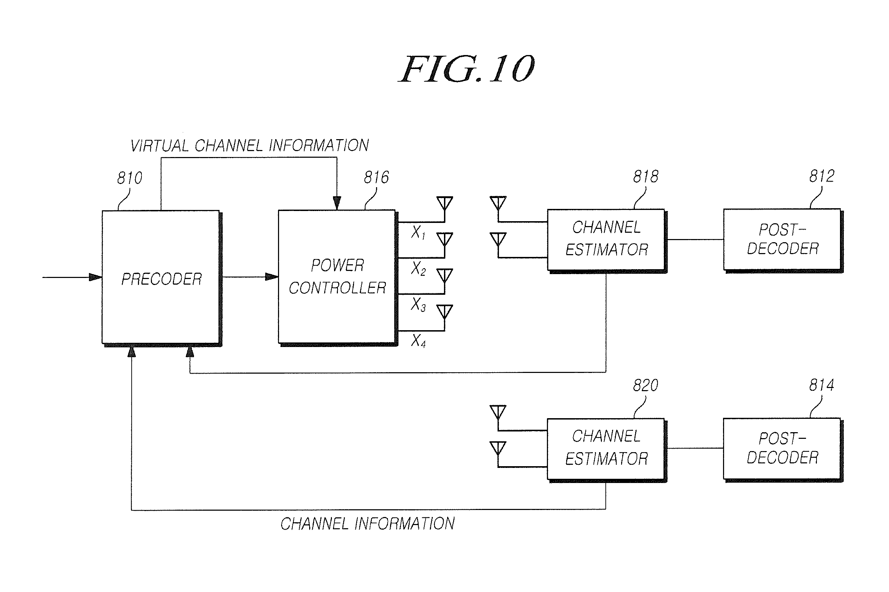

At this time, a power controller 816 is included after the precoder 216. The power controller 816 receives virtual channel information, which will be described in detail later, from the precoder 216, calculates antenna power corresponding to an optimal SINR, which will be described with reference to FIG. 10 later, and allocates power to multiple antenna ports. At this time, the power controller 816 may be arranged before/after the resource element mapper 218, but the position of the power controller 816 of the present invention is not limited thereto. Further, an element, which is not illustrated in FIG. 3, may take on the role of an element for receiving virtual channel information from the precoder 216 and calculating antenna power corresponding to an optimal SINR.

Although the structure of generating the signal of the downlink physical channel in the wireless communication system to which the embodiments of the present invention are applied has been described with reference to FIG. 3, the present invention is not limited thereto. That is, the structure of generating the signal of the downlink physical channel in the wireless communication system to which the embodiments of the present invention are applied may omit some parts of elements, replace the parts of the elements with/change to other elements, or add other elements.

For the aforementioned wireless communication technologies, various multiple antenna technologies have been developed to support high speed packet communication. The multiple antenna technology among the developed technologies refers to a technology using a spatial region as additional resources to obtain higher transmission speed, and is implemented based on a multiple antenna system in which a transmitter and a receiver include multiple antennas.

For example, a Multiple-Input Multiple-Output (MIMO) corresponds to a technology for providing a high spectrum efficiency due to the improved connection reliability and the interface constraint, and is divided into two structures such as an Open Loop (OL) system and a Closed Loop (CL) system. In the OL-MIMO, a transmitter does not have channel information for a data transmission. Accordingly, the transmitter of the OL-MIMO uses fixed transmission parameters, and the CL-MIMO uses the channel quality information for a transmission.

MIMO schemes are based on point-to-point communication in one point, that is, a Single User-MIMO (SU-MIMO), and a Multiple-User MIMI (MU-MIMO) system enables all users to equally connect for communication in consideration of scheduling algorithms, a Quality of Service of each user, and other requirements. Meanwhile, for the MU CL-MIMO, various researches on a feedback signaling, a multiple user scheduling, and a transmission/reception optimization have been made.

The MIMO system allocates power according to a channel gain value based on an assumption that the MIMO system has no interference or can communicate without interferences.

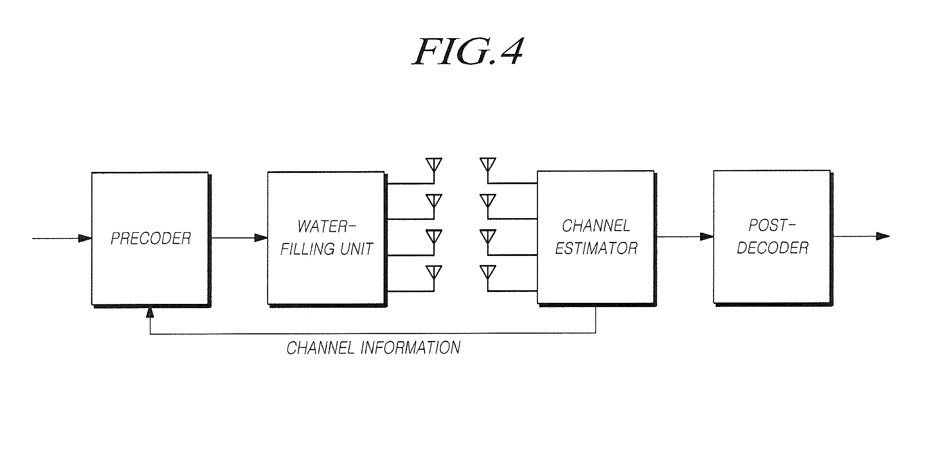

FIG. 4 is a diagram of a precoder included in a transmitting apparatus and a post-decoder included in a receiving apparatus in a SU-MIMO.

In order to determine an optimal value of a precoding matrix through which each transmitting data passes before loaded to an antenna, a channel is designated as a parallel independent channel through a receiving terminal operation such as an EVD (Eigenvalue Value Decomposition) or an SVD (Singular Value Decomposition), which analyzes a channel H to a special value or an inherent value such as H=UDV$^H$ (U and V$^H$ refer to unitary matrices and D refers to a diagonal matrix in which only elements located in diagonals have values), each channel or virtual channel gain is measured, and power is distributed for each channel or virtual channel based on the measured gain. For example, when it is targeted that a capacity (spectrum efficiency) is maximized, transmission power may be allocated to a spatial sub-channel through a water-filling scheme.

The water filling scheme corresponds to pouring a fixed amount of water in a container with an irregular bottom. Each inherent mode corresponds to a point of a bottom state of the container, and a height of the bottom in a predetermined point corresponds to an inverse of a Signal to Noise Ratio (SNR) related to the inherent mode.

Accordingly, a low height corresponds to a high SNR, and a high height corresponds to a low SNR. Next, total transmission power is poured in the container in such a manner that the transmission power is first poured up to a low point (that is, high SNR) in the container and the transmission power is then poured up to a high point (that is, low SNR). A power distribution depends on total transmission power and a depth of the container at a bottom surface. After all transmission power is poured, a water surface level for the container is consistent in all points. A point having a height higher than the water surface level is not filled (that is, an inherent mode having an SNR lower than a specific threshold value is not used).

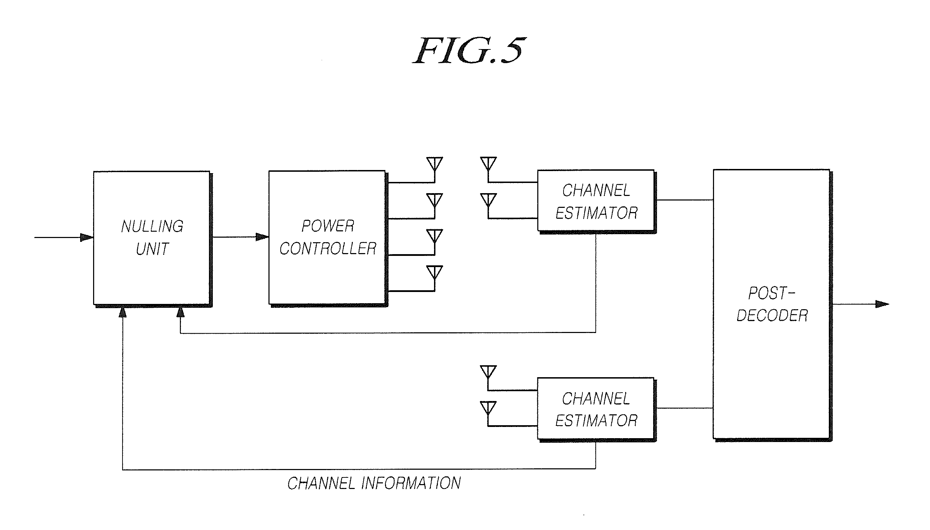

FIG. 5 is a diagram of a precoder included in a transmitting apparatus and a post-decoder included in a receiving apparatus in a MU-MIMO.

In the MU-MIMO, an independent channel is constructed through a beam forming scheme of performing an interference nulling operation, in which a receiver nullifies multiple user interferences, or a Zero-Forcing (ZF) scheme, in which a transmitter multiplies a transmission signal by a reciprocal number of a channel and transmits it in order to reduce interferences of another user or another antenna and then power is allocated according to each channel gain.

The aforementioned power allocation method has been described based on a case where there is no interference between streams or multiple accessing users. Operations such as the interference nulling or the Zero Forcing certainly remove interferences, but cause an SNR loss.

Hereinafter, embodiments of power and information transmission rate allocation methods, which consider changes in interferences according to a power allocation, and a power allocation method, which allocates power such that throughput is increased and a transmission capacity is maximized, will be described.

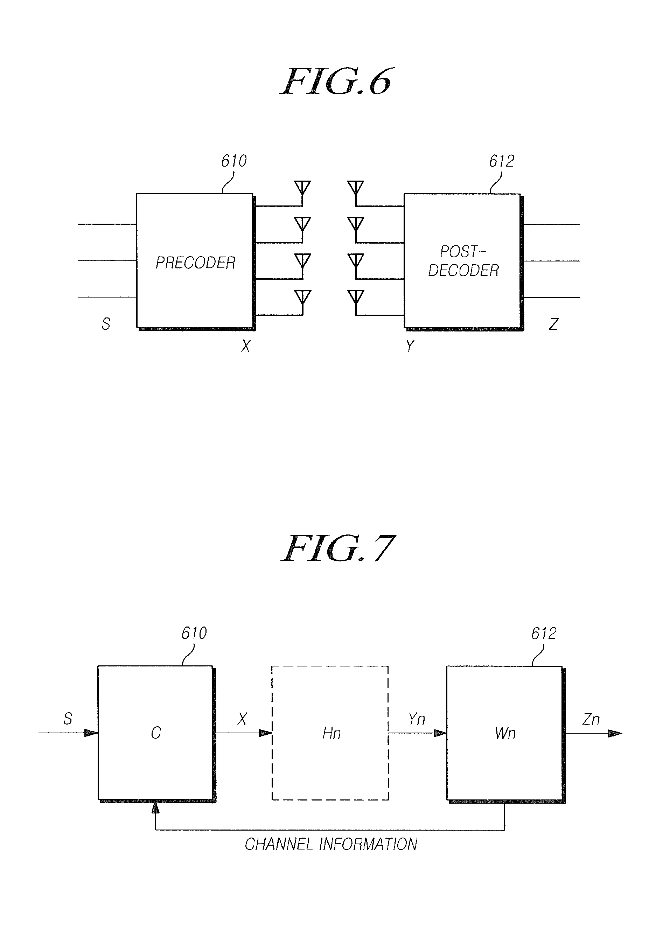

FIG. 6 is a diagram of a precoder included in a transmitting apparatus and a post-decoder included in a receiving apparatus according to embodiments of the present invention, and FIG. 7 is a block diagram of the system of FIG. 6.

Referring to FIGs. 6 and 7, a precoder 610 included in the transmitting apparatus precodes a source bit stream.

As shown in FIG. 7, when a source bit stream (data bit stream) is represented by S and a precoding matrix is represented by C, a value generated by precoding the source bit stream by the precoder 610 is X=C X S. At this time, the precoding matrix is determined as a value, which allows the system to obtain the most excellent capability, by using feedback information transmitted to the transmitting apparatus from the receiving apparatus.

Meanwhile, a post-decoder (or MIMO receiver) 612 of the receiving apparatus receives signals through antennas. At this time, if a channel matrix is H, a received signal has a value $Y_n = H_n \times X + \eta_n$ which is generated by adding a noise vector to a value generated by multiplexing the transmission signal X and the channel matrix X.

The post-decoder (or MIMI-receiver) 612 of the receiving apparatus decodes a final signal Z via a post processing. At this time, the final reception signal Z has a value generated by multiplexing a reception signal by a post decoding matrix W, that is, $Z_n = W_n \times Y_n$. The final reception signal Z is totally expressed as $Z_n = W_n(H_n \times C \times S + \overline{\eta}_n)$ for a source bit stream.

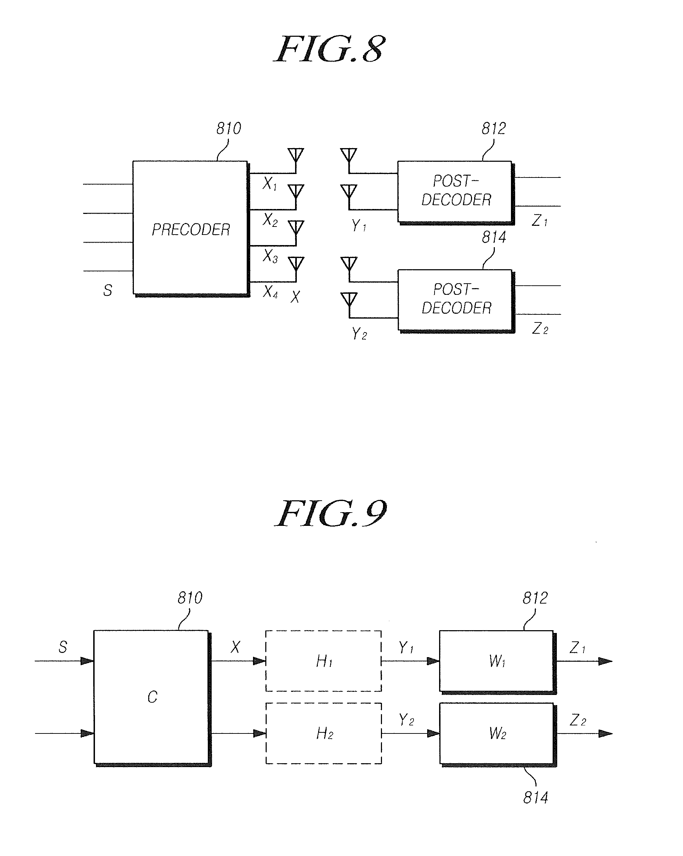

FIG. 8 illustrates constructions of a precoder included in a transmitting apparatus and a post-decoder included in a receiving apparatus according to embodiments of the present invention when the number of antennas in the transmitting apparatus is 4 and two receiving apparatuses receive signals through two antennas, respectively, and FIG. 9 is a block diagram of the system of FIG. 8.

Referring to FIGs. 8 and 9, descriptions for a precoder 810 of the transmitting apparatus and post-decoders 812 and 814 of the receiving apparatuses are the same as those of FIGs. 6 and 7 except that each of two receiving apparatuses receives a signal from the transmitting apparatus.

At this time, the channel matrix $H = \begin{bmatrix} h_{11} & h_{12} & h_{13} & h_{14} \\ h_{21} & h_{22} & h_{23} & h_{24} \\ h_{31} & h_{32} & h_{33} & h_{34} \\ h_{41} & h_{42} & h_{43} & h_{44} \end{bmatrix}$, or $H = \begin{bmatrix} H_1 \\ H_2 \end{bmatrix}$, and

$$H_0 = \begin{bmatrix} h_{11} & h_{12} & h_{13} & h_{14} \\ h_{21} & h_{22} & h_{23} & h_{24} \end{bmatrix}, \quad \text{or } H_1 = \begin{bmatrix} h_{31} & h_{32} & h_{33} & h_{34} \\ h_{41} & h_{42} & h_{43} & h_{44} \end{bmatrix}. \quad \text{In } h_{NrNt} \ (N_r=1\sim4, \ N_t=1\sim4), \ N_r \text{ denotes}$$

an antenna number of the receiving apparatus, and $N_t$ denotes an antenna number of the transmitting apparatus. Accordingly, in the channel matrix H, four elements ($h_{11}$, $h_{12}$, $h_{13}$, $h_{14}$) of a first row indicate channel states in which a first antenna of the receiving apparatus receives signals from four antennas of the transmitting antenna. In the channel matrix H, four elements of a second row to a fourth row indicate channel states in which a second antenna or a fourth antenna of the receiving apparatus receives signals from four antennas of the transmitting apparatus.

As it is possible to express $H_n$ as one square matrix H, it is also possible to express $Y_n$, $W_n$, or $Z_n$ as one vector

or matrix. That is, $Y = HX + \overline{\eta} = \begin{bmatrix} Y_1 \\ Y_2 \end{bmatrix}, \quad W = \begin{bmatrix} W_1 \\ W_2 \end{bmatrix}, \quad Z = WY = \begin{bmatrix} Z_1 \\ Z_2 \end{bmatrix}.$

FIG. 10 is a block diagram of a MIMO system implementing a power allocation and a precoding for increasing an SINR.

Referring FIGs. 9 and 10, the transmitting apparatus includes the same precoder 810 and power controller 816 as those of FIG. 8, and two receiving apparatuses include the same post-decoders 812 and 814 as those of FIG. 8 and channel estimators 818 and 820.

A precoding of the precoder 810 corresponds to transforming a transmission type of a signal. In the MIMO, a precoding wireless communication system does not directly output transmission signals through antennas in a one to one correspondence manner, but transmits signals through virtual antennas in such a manner that operation processed values of operation processed signals in advance are transmitted through antennas or transmits signals through virtual channels generated by a precoding. In the precoding wireless communication system, power of signals transmitted through the virtual channels corresponds to transmission power of each actual signal.

The precoder 810 precodes a source bit stream by multiplexing a precoding matrix, and provides the power controller 816 with virtual channel information according to estimates of the precoding matrix and the channel estimation.

The power controller 816 receives inputs of the precoded value and the virtual channel information and allocates power for each stream to obtain a maximum reception SINR or a reception SINR approximated to the maximum reception SINR based on the virtual channel information.

The channel estimators 818 and 820 of the receiving apparatus estimate channel information by using signals received through two or more antennas, and transmit the estimated channel information to the transmitting apparatus. The precoder 810 of the transmitting apparatus provides the power controller 816 with the channel information received from the channel estimators 818 and 820 and the virtual channel information generated by multiplexing the precoding matrix.

As described above, the power controller 816 allocates power for each stream to obtain the maximum reception SINR or the reception SINR approximated to the maximum reception SINR based on the virtual channel information provided from the precoder 810. The transmitting apparatus transmits a signal for each stream through multiple antennas according to power allocated for each stream from the power controller 816.

As a result, the channel estimators 818 and 820 of the receiving apparatus receives signals transmitted through multiple antennas for each stream according to power allocated for each stream to obtain the reception SINR of the power controller 816, so that the channel estimators 818 and 820 receive a signal of a maximum SINR or an SINR approximated to the maximum SINR.

Meanwhile, the post-decoders 812 and 814 multiplex signals received through antennas by a specific matrix to decode them to final reception signals.

Hereinafter, a process of allocating power for each stream to obtain a maximum reception SINR or a reception SINR approximated to the maximum reception SINR based on virtual channel information ($H'$,$H''$) provided from the precoder 810 by the power controller 816, that is, matrix information ($H' = H \times C$) generated by multiplexing a precoding matrix by a channel matrix transferred from the channel estimators 818 and 820 of the receiving apparatus, or matrix information ($H''=H \times C \times W$) generated by multiplexing the matrix information by a post decoding matrix of the receiving apparatus will be described in detail.

A power allocation is performed in consideration of characteristics of a virtual antenna and a virtual channel, and through the approaches, the power allocation may be performed in consideration of capabilities of all precoders 810 available in an actual MIMO system.

As described above, the reception signal and the post decoded final signal of the receiving apparatus correspond to $Y=H \times C \times S=H' \times S$ and $Z=W \times Y=W \times H' \times S=H'' \times S$, respectively, so a size of each stream received by a reception antenna of each reception apparatus is determined by a virtual channel $H'=H \times C$ of the transmitting apparatus and an SINR of each stream after the post-decoding of a precoded signal is determined by a virtual channel $H''=H \times C \times W$.

As described above, the channel estimators 818 and 820 of the receiving apparatus acquire channel information or channel state information to transmit it to the transmitting apparatus.

When the transmitting apparatus is aware of channel information or channel state information since the transmitting apparatus receives feedback information, that is, the channel information or the channel state information from the channel estimators 818 and 820 of the receiving apparatus (in a case of a closed-loop MIMO), the transmitting apparatus allocates power for each stream based on information about the virtual channel $H'$ of the transmitting apparatus. In addition, when the transmitting apparatus is also aware of information on the post-decoders 812 and 814 used in the receiving apparatus, the transmitting apparatus can allocate power for each stream based on information about the virtual channel $H''$ reflecting a post decoding matrix.

At this time, in a case of transmitting a signal through an antenna without a precoding, a power allocation or a power control has a concept of individually controlling outputs of transmission antennas. When the number of signals desired to be simultaneously transmitted is 2 and the number of transmission antennas is 2, two signals are transmitted through different antennas as shown in $x_0 = s_0$, $x_1 = s_1$, so it is possible to control each output size of antennas and control reception power of each signal.

However, in a case of the MIMO wireless communication system using a precoding, each of two signals So and $S_1$ is transmitted through two antennas $x_0$ and $x_1$ s shown in $x_0=0.7s_0+0.3s_1$, $x_1=0.3s_0+0.7s_1$. In this case, controlling each of outputs of antennas $x_0$ and $x_1$ is useless, but, instead, transmission power of signals $s_0$ and $s_1$ are controlled and allocated by controlling outputs of virtual antennas represented by $[0.7\ 0.3]^T$ and $[0.3\ 0.7]^T$.

The transmitting apparatus receives channel information or channel state information from the channel estimators 818 and 820 of the receiving apparatus, calculates a reception SINR of the receiving apparatus based on information about virtual channels ($H',H''$) of the transmitting apparatus generated by multiplexing the channel information by a precoding matrix, and allocates power for each stream such that an optimal reception SINR can be obtained.

In order to allocate power for each stream such that the optimal reception SINR can be obtained, the reception SINR is modeled as below.

First, when a receiving apparatus, which desires to receive $s_0$, receives $s_1$ and $s_2$ as interferences, a reception SINR is defined by formula (1) below.

$$SINR = \frac{(j_0 s_0)^2}{(j_1 s_1 + j_2 s_2)^2 + \sigma^2} \qquad \ldots \ldots \ldots \ldots (1)$$

In formula (1), $j_n$ denotes a propagation path gain of $s_n$, and $\sigma^2$ denotes an intensity of noise.

A multiplexing (special multiplexing) by the MIMO targets receiving apparatuses moving at a low speed, so an environment using the precoder 810 corresponds to a slow fading environment where a channel is changed at a low speed. In this case, the channel has quasi-static characteristics. In a case of a quasi-static channel, a reception SINR of which reception capability is expressed by an average SINR within a quasi-static section is defined as formula (2) below.

$$E[SINR]_{0,T} \approx \frac{E\left[(j_0 s_0)^2\right]}{E\left[(j_1 s_1 + j_2 s_2)^2\right] + \sigma^2} \qquad \ldots \ldots \ldots \ldots (2)$$

When the quasi-static section is long enough for a symbol period, interference power is approximated to power sum of signals generating interferences as defined by formula (3).

$$E\left[SINR\right]_{0,T} \approx \frac{J_0\rho_0}{J_1\rho_1 + J_2\rho_2 + \sigma^2}$$

.......... (3)

In formula (3), $j_n$ denotes a square of a propagation path gain of a signal $s_n$, and $\rho_n$ denotes transmission power of a signal $s_n$.

A matrix J indicating power relations to model an optimal reception SINR is defined by formula (4) below.

$$J = \begin{bmatrix} \rho_{11} & & \rho_{1N} \\ & \ddots & \\ \rho_{M1} & & \rho_{MN} \end{bmatrix}$$

......... (4)

When the transmitting apparatus is aware of structures of the post-decoders 812 and 814 used in the receiving apparatus, $\rho_{ij} = \left|h_{ij}''\right|^2$, and N=m. Otherwise, $\rho_{ij} = \left|h_{ij}'\right|^2$.

In a case where the transmitting apparatus is aware of the structures of the post-decoders 812 and 814, when $p_n = |s_n|^2$ and $P = [p_1 \cdots p_N]^T$ are defined, a diagonal element of $R = JP$ is reception power of each signal, and a reception SINR for a signal $s_n$ of a reception antenna n is defined by formula (5) when the reception antenna n receives the signal $s_n$ desired to be received.

$$SINR_n = \frac{r_{n,n}}{\sum_{i \neq n} r_{n,i} + \alpha^2}$$

......... (5)

In formula (5), $r_{n,n}$ in the numerator denotes a signal intensity of a signal $s_n$, $r_{n,r}$ in the denominator denotes an interference intensity of the signal $s_n$, and $\alpha^2$ in the denominator denotes a noise intensity.

Meanwhile, when the transmitting apparatus is not aware of the structures of the post-decoders 812 and 814, the transmitting apparatus cannot accurately predict each signal SINR after the post decoding, so that it is not possible to precisely allocate power. Instead, an SINR is defined by a sum of power of signals desired to be received and a sum of power of signals not desired to be received. That is, as shown FIGs. 8 and 10, when signals which a receiving apparatus 1 desires to receive, are $x_1$ and $x_2$, and signals which a receiving apparatus 2 desires to receive, are $x_3$ and $x_4$, reception SINRs of the receiving apparatuses 1 and 2 are defined by formulas (6) and (7).

$$SINR_1 = \frac{\sum_{i=1}^{2}\left(r_{1,i} + r_{2,i}\right)}{\sum_{i \neq 1,2}\left(r_{1,i} + r_{2,i}\right) + \alpha^2} \qquad \cdots\cdots\cdots (6)$$

In formula (6), the numerator denotes a sum of signal intensities of signals $x_1$ and $x_2$, which two antennas (antennas 1 and 2) of the receiving apparatus 1 desire to receive, $\alpha^2$ in the denominator denotes a noise intensity, and the remaining elements in the denominator denote a sum of signal intensities of $x_3$ and $x_4$, which are interference signals which two antennas (antennas 1 and 2) of the receiving apparatus 1 have received but do not desire to receive.

$$SINR_2 = \frac{\sum_{i=3}^{4}\left(r_{3,i} + r_{4,i}\right)}{\sum_{i \neq 3,4}\left(r_{3,i} + r_{4,i}\right) + \alpha^2} \qquad \cdots\cdots\cdots (7)$$

In formula (7), the numerator denotes a sum of signals intensities of signals $x_3$ and $x_4$, which two antennas (antennas 3 and 4) of the receiving apparatus 2 desire to receive, $\alpha^2$ in the denominator denotes a noise intensity, and the remaining elements in the denominator denote a sum of signal intensities of $x_1$ and $x_2$, which are interference signals which two antennas (antennas 3 and 4) of the receiving apparatus 2 have received but do not desire to receive.

Formulas (6) and (7) have a plurality of poles and peaks according to channel states, so that it is difficult to find a closed form solution, but it is possible to find optimal power P through an iterative process. An iterative method is generally based on the water-filling method.

For the iterative process, an interference matrix I is defined by formula (8) below to express a total SINR as a matrix formula.

$$I = \begin{bmatrix} c_{11}\rho_{11} & \cdots & c_{N1}\rho_{N1} \\ \vdots & \ddots & \vdots \\ c_{1M}\rho_{1M} & \cdots & c_{NM}\rho_{NM} \end{bmatrix} \qquad \cdots\cdots\cdots (8)$$

$c_{ij}$ is indicated by "0" when receptions of the same signals to a reception antenna $i$ of the receiving apparatus and a transmitting antenna $j$ of the transmitting apparatus do not negatively affect the capability of the receiving apparatus, and otherwise, $c_{ij}$ is indicated by "1".

That is, when $c_{ij}$=0 and the receiving apparatus uses two receiving antennas and an rx diversity scheme, signals received through the two antennas of the receiving apparatus 1 do not act as interference to each other, and thereby $c_{12} = c_{21} = 0$.

Further, even when each receiving apparatus uses two receiving antennas and is not aware of the structures of the post-decoders 812 and 814 as described in the above example, $c_{12} = c_{21} = 0$, $c_{34} = c_{43} = 0$. Power of an interference signal in a receiving antenna-n is defined as an nth row of IxP or a product of an nth row of I and P through the settings.

A matrix R indicating reception power of each stream is determined by the number of used reception antennas. When each user uses two antennas and the BS transmits four streams, which is defined by formula (9).

$$R = \begin{bmatrix} \rho_{11} + (1-c_{12})\rho_{12} & 0 & 0 & 0 \\ 0 & \rho_{22} + (1-c_{21})\rho_{21} & 0 & 0 \\ 0 & 0 & \rho_{33} + (1-c_{34})\rho_{34} & 0 \\ 0 & 0 & 0 & \rho_{44} + (1-c_{43})\rho_{44} \end{bmatrix}$$

$\cdots\cdots\cdots$ (9)

At this time, reception power is $P_{rk}=R \times P$. Accordingly, a reception SINR may be maximized through implementing P maximizing a solution of formula (10).

$$R \times P./(I \times P + \sigma^2 \overline{1})$$

$\cdots\cdots\cdots$ (10)

In formula (10), ./ denotes the division of elements of two matrices, and $\overline{1}$ denotes a $N \times 1$ vector having "1" as an element.

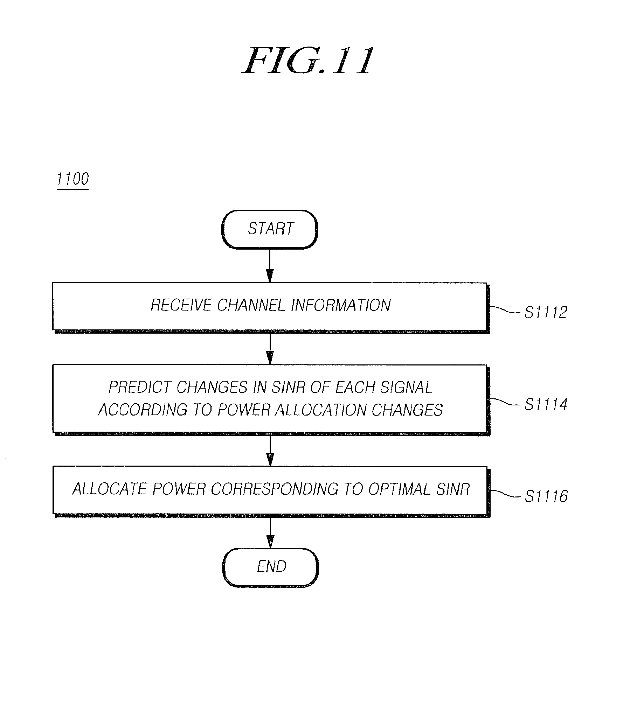

FIG. 11 is a flowchart of a power allocation method according to embodiments of the present invention.

Referring FIGs. 10 and 11, a power allocation method 1100 according to embodiments of the present invention first receives channel information or channel state information from a receiver side S1112. For example, channel information transferred from the channel estimators 818 and 820 of the receiver side is received. At this time, when even information on the post-decoders 812 and 814 is unknown, a reception SINR is predicted based on a virtual channel $H'=H \times C$ ($H$ is a channel matrix, and C is a precoding matrix). When the information on the post-decoders 812 and 814 is known, a reception SINR is predicted based on a virtual channel $H''=H \times C \times W$ ($W$ is a post decoding matrix).

Next, the change in each signal SINR is predicted according to a power allocation S1114. When the power allocation for each antenna is changed, the change in each signal SINR is predicted.

Specifically, when one of $P_1 \sim P_N$ is increased by a variance $\Delta$, an increment in a solution of formula (10) ($R \times P./(I \times P + \sigma^2 \overline{1})$) is identified.

First, in a state where all values of $P_1 \sim P_N$ are initialized to a value of "0", when only $P_1$ is increased by the variance $\Delta$, a solution of formula (10) is calculated. Next, in a state where $P_1$ has a value of 0", when only $P_2$ is increased by the variance $\Delta$, a solution of formula (10) is calculated. In the same way, the process is repeated by $P_N$, and then $P_K$ (K is one of 1 to N) maximizing a solution of formula (10) is determined.

In a state where $p_K$ (K is one of 1 to N) is changed to $p_K + \Delta$ through the same process, the process is repeated from $P_1$ to $P_N$ while increasing $P_1$ to $P_N$ by the variance $\Delta$. For example, if $p_K=p_2$, $p_2$ is set as the variance $\Delta$ ($p_2=\Delta$) and other values of p are set as a value of "0". And then $P_2$ to $P_N$ are increased by the variance $\Delta$ and solutions of formula (10) are calculated.

The process is repeated until available power remains, and a power allocation is terminated when the available power does not remain.

Next, power corresponding to a reception SINR is allocated S1116. That is, a solution of formula (10) is calculated while sequentially increasing $P_1$ to $P_N$ by the variance $\Delta$ until the available power remains, and power of each antenna is allocated by $P_1$ to $P_N$ right before a state where the available power does not remain.

Specifically, the power controller 816 disposed before/after the resource element mapper 218 of FIG. 3 controls such that signals are transmitted through multiple antennas with power for each stream of multiple antennas allocated through the above process. As a result, multiple antennas broadcast signals (electromagnetic waves) to the air by power allocated from the power controller 816, that is, intensities of the signals.

As described above, in the MU-MIMO, power is allocated to each stream in such a manner that a maximum reception SINR or a reception SINR approximated to the maximum reception SINR can be obtained in a state where there are interferences between streams, so that throughput may be increased and a transmission capacity may be maximized.

Although the embodiments of the present invention have been described with reference to the drawings, the present invention is not limited thereto.

For example, in the embodiments, although it is described that power for each stream is allocated such that a reception SINR of one or more receiving apparatuses can be maximized based on virtual channel information calculated by a precoding matrix and channel information provided by the receiving apparatus, power for each stream may be allocated such that reception power or a reception SNR as well as the reception SINR can be maximized. At this time, maximum reception power or a maximum reception SNR is obtained based on the virtual channel information calculated by the precoding matrix and the channel information.

Although a preferred embodiment of the present invention has been described for illustrative purposes, those skilled in the art will appreciate that various modifications, additions and substitutions are possible, without departing from the scope and spirit of the invention as disclosed in the accompanying claims. Therefore, the embodiments disclosed in the present invention are intended to illustrate the scope of the technical idea of the present invention, and the scope of the present invention is not limited by the embodiment. The scope of the present invention shall be construed on the basis of the accompanying claims in such a manner that all of the technical ideas included within the scope equivalent to the claims belong to the present invention.

CROSS-REFERENCE TO RELATED APPLICATION

This application claims priority from and the benefit under 35 U.S.C. §119(a) of Korean Patent Application No. 10-2009-0056706 filed on June 24, 2009, which is hereby incorporated by reference for all purposes as if fully set forth herein.

**Claims**

1. A method of allocating power, comprising:

   acquiring at least one of reception power, a reception SINR, or a reception SNR of one or more receiving apparatuses based on virtual channel information generated by multiplying a precoding matrix and channel information; and
   allocating power for each stream such that the reception SINR is maximized.

2. The method as claimed in claim 1, wherein the channel information corresponds to channel information fed back from a receiving terminal receiving a signal precoded according to a precoding matrix through a channel.

3. The method as claimed in claim 2, wherein allowing at least one of the reception power, the reception SINR, and the reception SNR to be maximized corresponds to obtaining P maximizing an formula, and the formula is defined

   as $R \times P/(1 \times P + \sigma^2 \overline{1})$, wherein

   $$R = \begin{bmatrix} \rho_{11} + (1-c_{12})\rho_{12} & 0 & 0 & 0 \\ 0 & \rho_{22} + (1-c_{21})\rho_{21} & 0 & 0 \\ 0 & 0 & \rho_{33} + (1-c_{34})\rho_{34} & 0 \\ 0 & 0 & 0 & \rho_{44} + (1-c_{43})\rho_{44} \end{bmatrix},$$

   P refers to power,

   $$I = \begin{bmatrix} c_{11}\rho_{11} & \cdots & c_{N1}\rho_{N1} \\ \vdots & \ddots & \vdots \\ c_{1M}\rho_{1M} & \cdots & c_{NM}\rho_{NM} \end{bmatrix},$$

   $\cdot/$ refers to division of elements of two matrices, $\overline{1}$ refers to a $N \times 1$ vector having "1" as an element, $\sigma^2$ refers to an intensity of noise, $p_n$ refers to transmission power of a signal $s_n$, and $c_{ij}$ is indicated by "0" when receptions of identical signals in a reception antenna $i$ of a receiving apparatus and a transmitting antenna $j$ of a transmitting apparatus do not negatively affect a capability of the receiving apparatus, and otherwise, $c_{ij}$ is indicated by "1".

4. The method as claimed in claim 3, wherein, when the channel information contains a post-decoder matrix used in the receiving terminal, $4^{91f}$ (at this time, i refers to a receiving antenna of a receiving apparatus, and j refers to a transmitting antenna of a transmitting apparatus) and otherwise, $\rho_{ij} = \left| H_{ij} \right|^2$.

5. A method of allocating power for each stream, comprising:

identifying an increment in a solution of a formula defined with a reflection of channel information while sequentially increasing one of $P_1$ to $P_N$ by a variance $\Delta$, the $P_1$ to $P_N$ corresponding to powers of n streams outputting transmitting signals from two or more antennas, respectively; and

identifying an increment in a solution of the formula while sequentially increasing one of $P_1$ to $P_N$ by the variance $\Delta$ in a state where $p_K$ is changed to $p_K + \Delta$ maximizing the solution,

wherein identifying of the increment in the solution of the formula defined with a reflection of channel information and identifying of the increment in the solution of the formula are repeated until available power remains, and power for each stream is allocated with $P_1$ to $P_N$ when the available power does not remain, and the formula is defined as $R \times P/(1 \times P + \sigma^2 \overline{1})$, wherein

$$R = \begin{bmatrix} \rho_{11} + (1 - c_{12})\rho_{12} & 0 & 0 & 0 \\ 0 & \rho_{22} + (1 - c_{21})\rho_{21} & 0 & 0 \\ 0 & 0 & \rho_{33} + (1 - c_{34})\rho_{34} & 0 \\ 0 & 0 & 0 & \rho_{44} + (1 - c_{43})\rho_{44} \end{bmatrix}$$

P refers

to power, $I = \begin{bmatrix} c_{11}\rho_{11} & \cdots & c_{N1}\rho_{N1} \\ \vdots & \ddots & \vdots \\ c_{1M}\rho_{1M} & \cdots & c_{NM}\rho_{NM} \end{bmatrix}$, $/$ refers to division of elements of two matrices, $\overline{1}$ refers to

a N×1 vector having "1" as an element, $\sigma^2$ refers to an intensity of noise, $p_n$ refers to transmission power of a signal $s_n$, and $c_{ij}$ is indicated by "0" when receptions of identical signals in a reception antenna $i$ of a receiving apparatus and a transmitting antenna $j$ of a transmitting apparatus do not negatively affect the capability of the receiving apparatus, and otherwise, $c_{ij}$ is indicated by "1".

6. The method as claimed in claim 5, wherein, when the channel information corresponds to information fed back from a receiving terminal and the channel information contains a post-decoder matrix used in the receiving terminal,

$$\rho_{ij} = \left| H_{ij} \right|^2, \quad \text{and otherwise,} \quad \rho_{ij} = \left| H_{ij} \right|^2.$$

7. A transmitting apparatus comprising:

a precoder for multiplying a precoding matrix to precode a source bit stream and providing virtual channel information generated by multiplying the precoding matrix and channel information; and

a power controller for receiving an input of a precoded value and the virtual channel information and allocating power for each stream such that at least one of reception power, a reception SINR, or a reception SNR of one or more receiving apparatuses is maximized based on the virtual channel information.

8. The transmitting apparatus as claimed in claim 7, wherein the precoding matrix and a channel estimation correspond to channel information fed back from a receiving terminal receiving a signal precoded according to the precoding matrix through a channel.

9. The transmitting apparatus as claimed in claim 8, wherein, in order to maximize the at least one of reception power, a reception SINR, or a reception SNR of one or more receiving apparatuses, the power controller allocates the power for each stream based on a formula $R \times P/(1 \times P + \sigma^2 \overline{1})$ wherein

$$R = \begin{bmatrix} \rho_{11} + (1-c_{12})\rho_{12} & 0 & 0 & 0 \\ 0 & \rho_{22} + (1-c_{21})\rho_{21} & 0 & 0 \\ 0 & 0 & \rho_{33} + (1-c_{34})\rho_{34} & 0 \\ 0 & 0 & 0 & \rho_{44} + (1-c_{43})\rho_{44} \end{bmatrix}$$ P refers to power,

$$I = \begin{bmatrix} c_{11}\rho_{11} & \cdots & c_{N1}\rho_{N1} \\ \vdots & \ddots & \vdots \\ c_{1M}\rho_{1M} & \cdots & c_{NM}\rho_{NM} \end{bmatrix}, \; ./ $$ refers to division of elements of two matrices, $\bar{1}$ refers to a N×1 vector having "1" as an element, $\sigma^2$ refers to an intensity of noise, $p_n$ refers to transmission power of a signal $s_n$, and $c_{ij}$ is indicated by "0" when receptions of identical signals in a reception antenna *i* of a receiving apparatus and a transmitting antenna *j* of a transmitting apparatus do not negatively affect the capability of the receiving apparatus, and otherwise, $c_{ij}$ is indicated by "1".

**10.** The transmitting apparatus as claimed in claim 9, wherein, when the channel information contains a post-decoder matrix used in the receiving terminal, $\rho_{ij} = \left| h_{ij}^H \right|^2$ (at this time, i refers to a receiving antenna of a receiving apparatus, and j refers to a transmitting antenna of a transmitting apparatus) and otherwise, $\rho_{ij} = \left| h_{ij} \right|^2$ .

**11.** A transmitting apparatus comprising:

a precoder for multiplying a precoding matrix to precode a source bit stream and providing virtual channel information generated by multiplying the precoding matrix and channel information; and
a power controller for identifying an increment in a solution of a formula defined with a reflection of channel information while sequentially increasing by a variance $\Delta$ one of $P_1$ to $P_N$, which correspond to power of n streams, respectively, identifying an increment in a solution of the formula while sequentially increasing by the variance $\Delta$ one of $P_1$ to $P_N$ in a state where $p_K$ is changed to $p_K + \Delta$ maximizing the solution, and repeating identifying of the increment in the solution of the formula defined with the reflection of the channel information and identifying of the increment in the solution of the formula until available power remains and power for each stream is allocated with $P_1$ to $P_N$ when the available power does not remain,

wherein the formula is defined as $R \times P/(1 \times P + \sigma^2 \bar{1})$, wherein

$$R = \begin{bmatrix} \rho_{11} + (1-c_{12})\rho_{12} & 0 & 0 & 0 \\ 0 & \rho_{22} + (1-c_{21})\rho_{21} & 0 & 0 \\ 0 & 0 & \rho_{33} + (1-c_{34})\rho_{34} & 0 \\ 0 & 0 & 0 & \rho_{44} + (1-c_{43})\rho_{44} \end{bmatrix}$$ P refers to power,

$$I = \begin{bmatrix} c_{11}\rho_{11} & \cdots & c_{N1}\rho_{N1} \\ \vdots & \ddots & \vdots \\ c_{1M}\rho_{1M} & \cdots & c_{NM}\rho_{NM} \end{bmatrix}, \; ./ $$ refers to division of elements of two matrices, $\bar{1}$ refers to a N×1 vector having "1" as an element, $\sigma^2$ refers to an intensity of noise, $p_n$ refers to transmission power of a signal $s_n$, and $c_{ij}$ is indicated by "0" when receptions of identical signals to a reception antenna *i* of a receiving apparatus and a transmitting antenna $j$ of a transmitting apparatus do not negatively affect the capability of the receiving apparatus, and otherwise, $c_{ij}$ is indicated by "1".

12. The transmitting apparatus claimed in claim 11, wherein, when the channel information corresponds to information fed back from a receiving terminal and the channel information contains a post-decoder matrix used in the receiving terminal, $\rho_{ij} = \left| h_{ij}^{\prime\prime} \right|^2$ (at this time, i refers to a receiving antenna of a receiving apparatus, and j refers to a transmitting antenna of a transmitting apparatus), and otherwise, $\rho_{ij} = \left| h_{ij}^{\prime} \right|^2$.

13. A receiving apparatus comprising:

a channel estimator for estimating channel information by using signals received through two or more antennas, transmitting the estimated channel information, and receiving signals allocated power for each stream according to the transmitted channel information and transmitted from a transmitting apparatus through the antennas; and
a post-decoder for multiplying the signals received through the antennas by a specific matrix to decode the multiplied signals to final reception signals.

14. The receiving apparatus as claimed in claim 13, wherein the channel estimator estimates the channel information by using a specific matrix of the post-decoder in addition to the signals received through the antennas and transmits the channel information.

15. A transmitting apparatus comprising:

a scrambler for scrambling bits input in a form of codewords via a channel coding in a downlink;
a modulation mapper for modulating the scrambled bits by the scrambler to complex modulation symbols;
a layer mapper for mapping a complex modulation symbol to one or a plurality of transmission layers;
a precoder for precoding a complex modulation symbol on each of transmission channels of antenna ports and providing virtual channel information according to a precoding matrix and a channel estimation; and
a resource element mapper for mapping a complex modulation symbol for each of the antenna ports to a corresponding resource element,
wherein virtual channel information is input and power for each stream is allocated such that at least one of reception power, a reception SINR, and a reception SNR of one or more receiving apparatuses is maximized based on the input virtual channel information.

# FIG.1

*FIG.2*

SCRAMBLING — 110

MODULATION MAPPER — 112

TRANSFORM PRECODER — 114

RESOURCE ELEMENT MAPPER — 116

SC-FDMA SIGNAL GENERATOR — 118

*FIG.3*

*FIG.4*

FIG.5

CHANNEL INFORMATION

EP 2 448 138 A2

# FIG.6

# FIG.7

CHANNEL INFORMATION

## FIG.8

## FIG.9

# FIG.10

VIRTUAL CHANNEL INFORMATION

810

816

818

812

PRECODER → POWER CONTROLLER

$X_1$
$X_2$
$X_3$
$X_4$

CHANNEL ESTIMATOR → POST-DECODER

820

814

CHANNEL ESTIMATOR → POST-DECODER

CHANNEL INFORMATION

EP 2 448 138 A2

# FIG.11

<u>1100</u>

```
            ┌─────────┐
            │  START  │
            └────┬────┘
                 │
                 ▼
┌──────────────────────────────────────────┐
│      RECEIVE CHANNEL INFORMATION          │──── S1112
└──────────────────────┬───────────────────┘
                       │
                       ▼
┌──────────────────────────────────────────┐
│   PREDICT CHANGES IN SINR OF EACH SIGNAL  │
│   ACCORDING TO POWER ALLOCATION CHANGES   │──── S1114
└──────────────────────┬───────────────────┘
                       │
                       ▼
┌──────────────────────────────────────────┐
│ ALLOCATE POWER CORRESPONDING TO OPTIMAL SINR │──── S1116
└──────────────────────┬───────────────────┘
                       │
                       ▼
                 ┌─────────┐
                 │   END   │
                 └─────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020090056706